# EUROPEAN PATENT SPECIFICATION

(11) **EP 3 611 382 B1**
(45) Date of publication and mention of the grant of the patent: **13.01.2021**
(21) Application number: 18201281.5
(22) Date of filing: 18.10.2018
(51) Int. Cl.: F04D 25/08, F04D 29/62, H02K 9/06, B60S 5/04

(54) **INFLATOR WITH AN AIR GUIDING SLEEVE**
AUFBLASVORRICHTUNG MIT EINER LUFTFÜHRUNGSHÜLSE
DISPOSITIF DE GONFLAGE A MANCHON GUIDANT L'AIR

(30) Priority: 16.08.2018 CN 201810934815
(43) Date of publication of application: 19.02.2020
(73) Proprietor: Dongguan Richtek Electronics Co., Ltd., Dongguan, Guandong 523808 (CN)
(72) Inventor: KEN, Yang, Dongguan, Guangdong 523808 (CN)
(74) Representative: ZHAOffice SPRL

(56) References cited:
- EP-A1- 3 067 561
- JP-A- 2003 254 239
- US-A1- 2013 228 316

## Description

### FIELD OF THE INVENTION

The present invention relates to the technical field of inflators, and more particularly to an inflator with an air guiding sleeve.

### BACKGROUND OF THE INVENTION

An inflator is one of the common devices used for inflating various types of pneumatic tires. During the use of the inflator, wind blades are usually provided for cooling the inflator, but the structural design of most conventional inflators fails to meet the heat dissipation requirements while providing a sturdy and simple construction. As a result, the performance of the inflator is affected adversely due to the low heat dissipation efficiency of the inflator and/or the construction of the inflator is complex.

Japanese Patent application JP 2003 254239 discloses a compressor provided with a cylindrical fan guide extending to an axial front side from an outer peripheral side of a stator of a driving motor. A motor side cooling fan is disposed within the fan guide located on a front side of the stator. Cooling air generated within the fan guide by the motor side cooling fan flows to the stator to cool the driving motor.

United States Patent application US 2013/228316 discloses a heat dissipation structure of the tire repair machine, wherein, a positioning pedestal having at least one channel is provided inside the body, a channel inlet and a channel outlet are provided at the two ends of the channel respectively; a gas supply unit arranged inside the body comprises a motor and an air compressor driven by the motor, the motor is arranged at the rear of the positioning pedestal, such that the radial direction of a centrifugal fan connected with the drive shaft of the motor is directed to the channel inlet, while the air compressor is corresponding to the channel outlet; when the motor drives the air compressor to run, the air drawn in by the centrifugal fan can blow the air compressor via the channel, so as to perform heat dissipation for the air compressor.

European Patent Application EP 3 067 561 disclosesingn inflator includes a box and a compressor unit installed in the box. The box is composed of a cover and a base, which are respectively provided with upper and lower airflow-guiding members, which can quickly guide the air current generated by a cooling fan of the compressor unit to enter the motor's housing via two openings of the housing and to flow out of the motor's housing via downstream through holes of the housing, thus dissipating the heat generated by a rotor assembly in the motor.

### SUMMARY OF THE INVENTION

In view of the aforementioned drawback of the conventional inflators, the inventor of the present invention based on years of experience in the related industry conducted extensive research and experiment, and finally developed an inflator with an air guiding sleeve, wherein a rotating cooling fan is provided for flowing the air from a chassis through an air guiding hole to increase the wind pressure and wind speed of the air flowing through a core and a drive motor, so as to improve the heat dissipation performance of the inflator, and an air guiding ring is provided for protecting the cooling fan and preventing the cooling fan from being damaged by collisions.

Therefore, it is a primary objective of the present invention to provide an inflator with an air guiding sleeve comprising: a chassis; a core and a drive motor, installed in the chassis, and the drive motor being provided for driving the core to inflate an external object, characterized in that the inflator further comprises an air guiding sleeve and a cooling fan, and the air guiding sleeve has an air guiding hole penetrating through the air guiding sleeve, and the drive motor comprises a main body and a shaft rotatably installed to the main body, and the shaft has an end protruded from the main body for driving the core to move, and the other end protruded from the main body for coupling the cooling fan, air and the guiding sleeve includes a positioning shell and an air guiding ring coupled to the positioning shell, the positioning shell and the air guiding ring being integral formed as a one-piece structure, and the positioning shell is installed to the chassis and the drive motor, and the air guiding ring is sheathed onto an external side of the cooling fan around the cooling fan.

The positioning shell has a cross-section in a rectangular shape, and the air guiding ring has a cross-section in a circular shape, and the positioning shell has a hole diameter greater than a hole diameter of the air guiding ring, and a flat external surface of the positioning shell abuts against the chassis preventing the positioning shell from rotating with respect to the chassis, and wherein the positioning shell has a notch concavely formed at an end of the positioning shell away from the air guiding ring, and the chassis has a latching block extending into the notch of the positioning shell for latching the chassis to the positioning shell.

The positioning shell has a plurality of limiting arms extending into the air guiding hole, and installed around the central axis of the air guiding sleeve disposed around the main body of the motor and disposed on the same side of the cooling fan, and a side of the limiting arm away from the cooling fan is provided for abutting against an external surface of the main body of the drive motor to prevent the drive motor from moving along a radial direction of the air guiding sleeve.

The plurality of limiting arms have blocking protrusions formed by extending a free end of the limiting arms towards the central axis of the air guiding sleeve, , , and the blocking protrusion is provided for abutting against an end surface of an end of the main body of the drive motor to limit the assembling position in an axial direction between the main body of the drive motor and the air guiding sleeve.

Preferably, the limiting arms have positioning slots concavely formed on a side of the limiting arms away from the cooling fan, and the chassis has positioning portions extending into the positioning slots.

Preferably, the positioning shell has four lead inclined plates disposed at the corners of the positioning shell arranged around the central axis of the air guiding hole into an circular array.

Preferably, the inflator with an air guiding sleeve further comprises a fixing ring sheathed onto an external side of the drive motor, and an air gap being formed between the drive motor and the chassis; and two lugs convexly formed at both sides of the fixing ring and disposed away from one another, and the two lugs being installed to the chassis.

Preferably, one of the lugs has a limiting bump, and the chassis has a limiting groove for receiving the limiting bump.

Preferably, the drive motor has a circular blind slot concavely formed on an external surface of the drive motor, and the fixing ring is received into the circular blind slot.

Preferably, the drive motor has an anti-rotation slot communicated with the circular blind slot, and the fixing ring has an anti-rotation plate extending into the anti-rotation slot.

Preferably, both lugs have a latching blind slot, and the chassis has two further latching blocks, the two latching blocks being extended into the latching blind slots for latching the fixing ring via the lugs to the chassis.

In summation, the present invention has the following advantages and effects. With the air guiding sleeve, the positioning shell of the air guiding sleeve is provided for positioning the chassis and/or the drive motor precisely to guarantee the cooling fan to be positioned into the air guiding ring of the air guiding sleeve precisely and securely using a simple construction, and the rotating cooling fan extracts the air from the chassis through an air guiding hole to increase the wind pressure and wind speed of the air flowing through the core and the drive motor to improve the heat dissipation performance of the inflator. The air guiding ring is provided for protecting the cooling fan and preventing the cooling fan from being damaged by collisions.

### BRIEF DESCRIPTION OF THE DRAWINGS

FIG. 1 is a perspective view of the present invention;
FIG. 2 is an exploded view of the present invention;
FIG. 3 is a perspective view of an air guiding sleeve of the present invention;
FIG. 4 is another perspective view of an air guiding sleeve of the present invention;
FIG. 5 is a front view of a drive motor of the present invention;
FIG. 6 is a perspective view of a fixing ring of the present invention; and
FIG. 7 is another perspective view of a fixing ring of the present invention.

### DESCRIPTION OF THE PREFERRED EMBODIMENTS

The technical contents of the present invention will become apparent with the detailed description of preferred embodiments accompanied with the illustration of related drawings as follows. It is intended that the embodiments and figures disclosed herein are to be considered illustrative rather than restrictive.

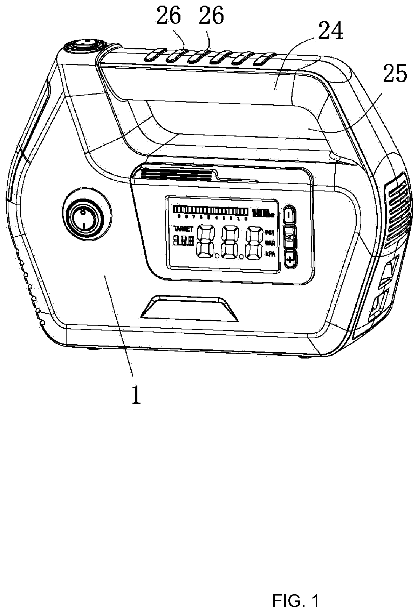

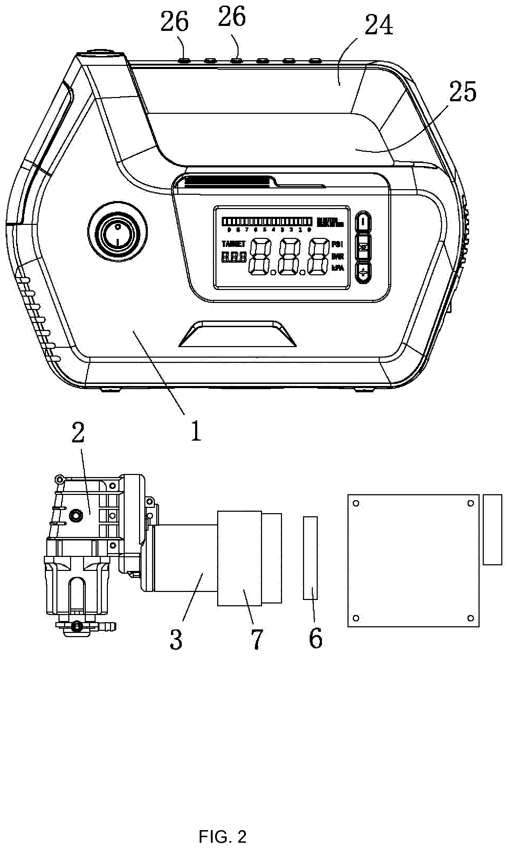

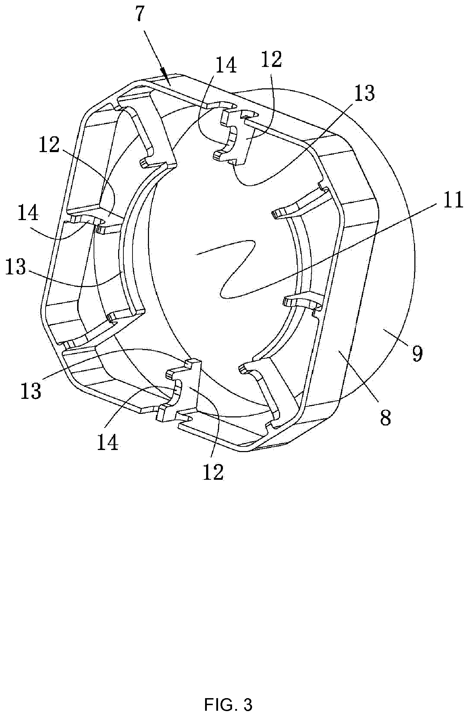

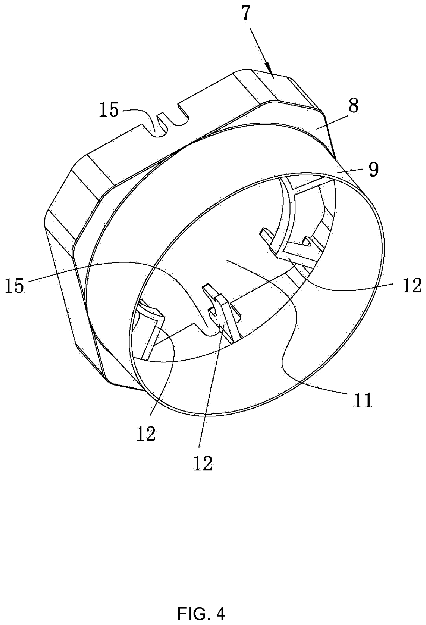

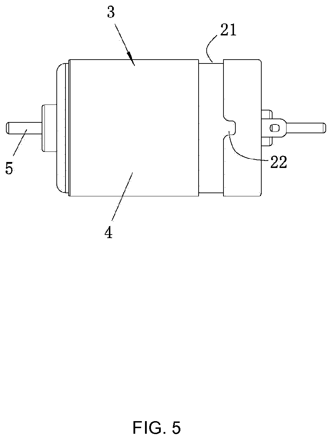

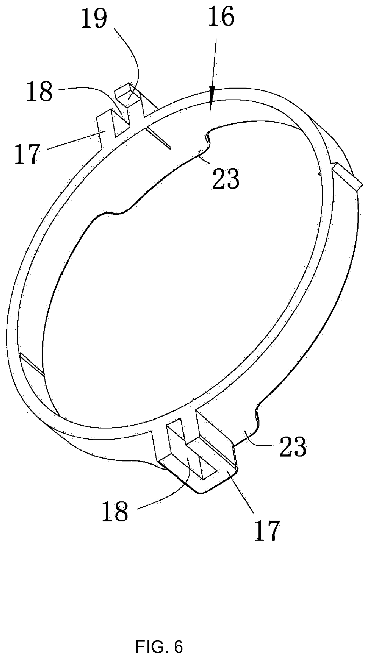

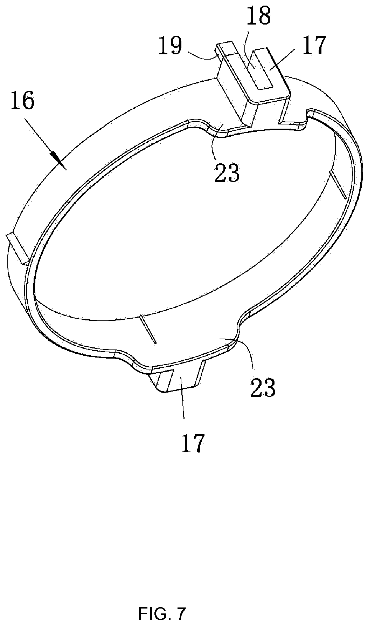

With reference to FIGS. 1 to 7 for an inflator with an air guiding sleeve in accordance with the present invention, the inflator comprises: a chassis 1; a core 2 and a drive motor 3 installed in the chassis 1, and the drive motor 3 being provided for driving the core 2 to inflate an external object (such as a pneumatic tire or a balloon, etc.), and the chassis 1 having an air inlet hole (not shown in the figure) and an air outlet hole (not shown in the figure) communicated with the air inlet hole; an air guiding sleeve 7 and a cooling fan 6, and the air guiding sleeve 7 having an air guiding hole 11 penetrating through the air guiding sleeve 7, and the core 2 and the drive motor 3 being disposed between the air inlet hole and the air outlet hole. Preferably, the core 2 and the drive motor 3 are disposed collinearly between the air inlet hole and the air outlet hole, and the drive motor 3 comprises a main body 4 and a shaft 5 rotatably installed to the main body 4, and both ends of the shaft 5 are protruded from both left and right ends of the main body 4 respectively, and the end of the shaft 5 protruded from an end of the main body 4 is provided for driving the core 2 to move, and the other end of the shaft 5 protruded from the other end of the main body 4 is provided for connecting the cooling fan 6. The air guiding sleeve 7 comprises a positioning shell 8 and an air guiding ring 9 coupled to the positioning shell 8, wherein the positioning shell 8 and the air guiding ring 9 are integrally formed as a one-piece structure, and the positioning shell 8 is mounted onto the chassis 1 and/or the drive motor 3, and the air guiding ring 9 is sheathed onto an external side of the cooling fan 6, and the air guiding ring 9 is installed around the cooling fan 6.

During the use of the inflator, the core 2 and the drive motor 3 are major heat generating components. The inflator of the present invention comes with the air guiding sleeve 7, and the positioning shell 8 of the air guiding sleeve 7 is provided for positioning the chassis 1 and/or the drive motor 3 precisely to guarantee the cooling fan 6 to be positioned precisely in the air guiding ring 9 of the air guiding sleeve 7, so that the rotating cooling fan 6 can extract the air from the chassis 1 through the air guiding hole 11 of the air guiding sleeve 7 to increase the wind pressure and wind speed of the air flowing through the core 2 and the drive motor 3, so as to improve the heat dissipation performance of the inflator. The air guiding ring 9 is provided for protecting the cooling fan 6, preventing the cooling fan 6 from being damaged by collisions, and extending the service life of the cooling fan 6.

The positioning shell 8 has a cross-section in a rectangular shape, and the air guiding ring 9 has a cross-section in a circular shape, and the positioning shell 8 has a hole diameter greater than a hole diameter of the air guiding ring 9, and the difference between the hole diameter of the positioning shell 8 and the hole diameter of the air guiding ring 9 gives a flow rate difference of the air to achieve a change of the wind pressure and the wind speed of the flowing air, so as to improve the cooling effect of the cooling fan 6 to the drive motor 3 and the core 2. The positioning shell 8 has an external surface abutting against the chassis 1, wherein a flat external surface of the positioning shell 8 abuts the chassis 1, so that the positioning shell 8 and the chassis 1 can be attached altogether securely to prevent the positioning shell 8 from rotating with respect to the chassis 1. In this embodiment, the positioning shell 8 has a plurality of lead inclined plates (not labelled in the figure) disposed at the corners of the positioning shell 8 respectively, wherein the quantity of the lead inclined plates is equal to four, and the four lead inclined plates are arranged around the central axis of the air guiding hole 11 into an circular array. The lead inclined plates enhance the strength of the positioning shell 8 to prevent the positioning shell 8 from being compressed and deformed by the chassis 1 easily, so as to improve the performance of the air guiding sleeve 7.

The positioning shell 8 has a plurality of limiting arms 12 extending into the air guiding hole 11 and disposed around the central axis of the air guiding sleeve 7, wherein the limiting arms 12 are situated on the same side of the cooling fan 6, and a side of each limiting arm 12 away from the cooling fan 6 is provided for abutting against the main body 4. In an assembling process of the inflator, the air guiding sleeve 7 is assembled to the main body 4 of the drive motor 3 until an end of the main body 4 abuts against a side of the limiting arm 12, such that the assembling positon between the main body 4 and the air guiding sleeve 7 can be positioned precisely, and then the cooling fan 6 is installed into the air guiding ring 9.

The limiting arm 12 has a blocking protrusion 13 formed by extending a free end of the limiting arm 12 towards the central axis of the air guiding sleeve 7, and the plurality of limiting arms 12 is disposed around the main body 4, and the blocking protrusions 13 of the plurality of limiting arms 12 are arranged around the central axis of the air guiding hole 11, and the free end of the limiting arm 12 is provided for abutting an external surface of the main body 4 to prevent the drive motor 3 from moving along the radial direction of the air guiding sleeve 7 and with respect to the air guiding sleeve 7, and the blocking protrusion 13 is provided for abutting against an end surface of an end of the main body 4 to limit the assembling position between the main body 4 and the air guiding sleeve 7 precisely. Preferably, the air guiding sleeve 7 has a transitional arm (not shown in the figure) coupled to the plurality of limiting arms 12, wherein the transitional arm is provided for coupling the plurality of limiting arms altogether. Compared with the strength of a single limiting arm 12, this arrangement can prevent the deformation of the single limiting arm 12 with a smaller strength or the affection of the precise positioning between the air guiding sleeve 7 and the drive motor 3.

The limiting arm 12 has a positioning slot 14 concavely formed on a side of the limiting arm 12 away from the cooling fan 6, and the chassis 1 has a positioning portion (not shown in the figure) extending into the positioning slot 14. A sidewall of the positioning slot 14 abuts against the positioning portion to effectively prevent the chassis 1 and the positioning shell 8 from moving with respect to each other.

The positioning shell 8 has a notch 15 concavely formed at an end of the positioning shell 8 away from the air guiding ring 9, and the chassis 1 has a latching block (not shown in the figure) extending into the notch 15. In this embodiment, the chassis 1 is formed by engaging an upper casing (not labelled in the figure) and a lower casing (not labelled in the figure). After the inflator is assembled, the latching block is extended into the notch 15, and the latching block is provided to assist improving the strength of the positioning shell 8. After the upper casing and the lower casing abut against the external surface of the positioning shell 8, the positioning shell 8 can be prevented from being deformed by pressed excessively by its own strength.

The inflator with an air guiding sleeve further comprises a fixing ring 16 sheathed on to an external surface of the drive motor 3 and fixed onto the chassis 1, and an air gap formed between the external surface of the drive motor 3 and the internal surface of the chassis 1, and the cooling fan 6 drives the air flowing through the air gap between the drive motor 3 and the chassis 1, so as to dissipate the heat of the core 2 and the drive motor 3 and improve the cooling effect of the inflator.

The fixing ring 16 has two lugs 17 formed on both sides away from the fixing ring 16 and configured to be opposite to each other, and the two lugs 17 are fixed onto the chassis 1 to decrease the contact area of the fixing ring 16 and the chassis 1. Preferably, both lugs 17 have a latching blind slot 18, and the fixing ring 16 is made of plastic. With the latching blind slot 18, the thickness of the lugs 17 can be reduced (compared with the conventional solid lugs 17) to prevent defects of the lugs 17 caused by the plastic shrinkage rate or a too-large thickness of the lugs 17. The chassis 1 may have two latching blocks (not shown in the figure) if needed, and the two latching blocks are extended into the latching blind slots 18 respectively.

After the fixing ring 16 is installed onto the chassis 1, the latching block of the chassis 1 is extended into the latching blind slot 18, and a sidewall of the latching blind slot 18 is provided for blocking the latching block to limit the position of the fixing ring 16 of the chassis 1. After the inflator is assembled, the fixing ring 16 can be prevented effectively from moving with respect to the chassis 1.

One of the lugs 17 has a limiting bump 19, and the chassis 1 has a limiting groove (not shown in the figure) for receiving the limiting bump 19. During the process of installing the fixing ring 16 and the chassis 1, the limiting bump 19 is aligned precisely with the limiting groove first, and then the chassis 1 and the fixing ring 16 are installed, so that the limiting bump 19 is plugged into the limiting groove to align the positions of the fixing ring 16 and the chassis 1 precisely, so as to prevent a defect of the assembled inflator caused by the wrong installation of the fixing ring 16.

The drive motor 3 has a circular blind slot 21 concavely formed on an external surface of the drive motor 3, and the fixing ring 16 is received into the circular blind slot 21, and a sidewall of the circular blind slot 21 is provided for blocking the fixing ring 16 to prevent the fixing ring 16 from moving with respect to the drive motor 3, and a portion of the main body of the fixing ring 16 is not extended out from the external surface of the drive motor 3. In other words, the remaining portion of the fixing ring 16 other than the two lugs 17 is completely sunk into the circular blind slot 21 to prevent the fixing ring 16 from blocking the air flowing through the air gap between the drive motor 3 and the chassis 1, so as to guarantee the air driven by the cooling fan 6 to flow stably and assist improving the cooling effect.

The drive motor 3 has an anti-rotation slot 22 communicated with the circular blind slot 21, and concavely formed on a sidewall of the circular blind slot 21. The fixing ring 16 has an anti-rotation plate 23, so that after the fixing ring 16 is sheathed on the drive motor 3, the anti-rotation plate 23 is extended into the anti-rotation slot 22, and a sidewall of the anti-rotation slot 22 is provided for abutting against the anti-rotation plate 23 to prevent the fixing ring 16 and the drive motor 3 to rotate with respect to one another. In this embodiment, the lugs 17 are coupled to the fixing ring 16 and the anti-rotation plate 23 to achieve the effects of extending the length of the lugs 17, assisting extending the length of the latching blind slot 18, and improving the latching effect between the latching block and the lugs 17.

In this embodiment, the fixing ring 16 is made of soft plastic such as silicone, wherein the soft plastic gives a better effect of absorbing the shock produced during the operation of the drive motor 3.

The chassis 1 has a grip 24, and both ends of the grip 24 are coupled to the chassis 1, and a yielding hole 25 (not labelled in the figure) is formed between the grip 24 and the chassis 1. During use, a user may insert a finger into the yielding hole 25 and then hold the grip 24 by a hand to facilitate the chassis 1 to move the inflator conveniently, so as to improve the user's using experience. Preferably, the grip 24 further has a frictional bump 26 abutting the user's hand to increase the friction between the user's hand and the rip 24. The frictional bump 26 may come with a plural quantity, and the frictional bumps 26 are configured collinearly along the lengthwise direction of the grip 24.

While the invention has been described by means of specific embodiments, numerous modifications and variations could be made thereto by those skilled in the art without departing from the scope of the invention which is solely defined by the claims.

## Claims

1. An inflator with an air guiding sleeve, comprising a chassis (1), and a core (2) and a drive motor (3) installed in the chassis (1), and the drive motor (3) being provided for driving the core (2) to inflate an external object, wherein the inflator further comprises an air guiding sleeve (7) and a cooling fan (6), and the air guiding sleeve (7) has an air guiding hole (11) penetrating through the air guiding sleeve (7), and the drive motor (3) comprises a main body (4) and a shaft (5) rotatably installed to the main body (4), and the shaft (5) has an end protruded from the main body (4) for driving the core (2) to move, and the other end protruded from the main body (4) for coupling the cooling fan (6), and the air guiding sleeve (7) includes a positioning shell (8) and an air guiding ring (9) coupled to the positioning shell (8), the positioning shell (8) and the air guiding ring (9) being integral formed as a one-piece structure and the positioning shell (8) is installed to the chassis (1) and the drive motor (3), and the air guiding ring (9) is sheathed onto an external side of the cooling fan (6) around the cooling fan (6),
the positioning shell (8) has a cross-section in a rectangular shape, and the air guiding ring (9) has a cross-section in a circular shape, and the positioning shell (8) has a hole diameter greater than a hole diameter of the air guiding ring (9), and a flat external surface of the positioning shell (8) abuts against the chassis (1) preventing the positioning shell (8) from rotating with respect to the chassis (1), and wherein the positioning shell (8) has a notch (15) concavely formed at an end of the positioning shell (8) away from the air guiding ring (9), and the chassis (1) has a latching block extending into the notch (15) of the positioning shell for latching the chassis to the positioning shell (8) and wherein the positioning shell (8) has a plurality of limiting arms (12) extending inwards into the air guiding hole (11), and installed around the central axis of the air guiding sleeve (7), disposed around the main body (4) of the motor (3), and disposed on the same side of the cooling fan (6), and a free end of each limiting arm (12) away from the cooling fan (6) is provided for abutting against an external surface of the main body (4) of the drive motor (3) to prevent the drive motor (3) from moving along a radial direction of the air guiding sleeve (7) and the plurality of limiting arms (12) have blocking protrusions (13) formed by extending a free end of the limiting arms (12) towards the central axis of the air guiding sleeve (7), and the blocking protrusions (13) are provided for abutting against an end surface of an end of the main body (4) of the drive motor (3) to limit the assembling position in an axial direction between the main body (4) of the drive motor (3) and the air guiding sleeve (7).

2. The inflator with an air guiding sleeve (7) according to claim 1, wherein the limiting arms (12) have positioning slots (14) concavely formed on a side of the limiting arms (12) away from the cooling fan (6), and the chassis (1) has positioning portions extending into the positioning slots (14).

3. The inflator as claimed in claim 1 or 2, wherein the positioning shell (8) has four lead inclined plates disposed at the corners of the positioning shell (8) arranged around the central axis of the air guiding hole (11) into an circular array.

4. The inflator with an air guiding sleeve (7) according to claim 1, further comprising a fixing ring (16) sheathed onto an external side of the drive motor (3), and an air gap being formed between the drive motor (3) and the chassis (1); and two lugs (17) convexly formed at both sides of the fixing ring (16) and disposed away from one another, and the two lugs (17) being installed to the chassis (1).

5. The inflator with an air guiding sleeve (7) according to claim 4, wherein one of the lugs (17) has a limiting bump (19), and the chassis (1) has a limiting groove for receiving the limiting bump (19).

6. The inflator with an air guiding sleeve (7) according to claim 4, wherein the drive motor (3) has a circular blind slot (21) concavely formed on an external surface of the drive motor (3), and the fixing ring (16) is received into the circular blind slot (21).

7. The inflator with an air guiding sleeve (7) according to claim 6, wherein the drive motor (3) has an anti-rotation slot (22) communicated with the circular blind slot (21), and the fixing ring (16) has an anti-rotation plate (23) extending into the anti-rotation slot (22).

8. The inflator with an air guiding sleeve (7) according to any of the claims 4 to 7, wherein both lugs (17) have a latching blind slot (18), and the chassis (1) has two further latching blocks, the two latching blocks being extended into the latching blind slots (18) for latching the fixing ring (16) via the lugs (17) to the chassis (1).

## Patentansprüche

1. Aufblasvorrichtung mit einer Luftführungshülse, umfassend ein Gehäuse (1) und einen Kern (2) und einen Antriebsmotor (3), der in dem Gehäuse (1) montiert ist, und wobei der Antriebsmotor (3) zum Antrieb des Kernes (2) vorgesehen ist, um ein Außenobjekt aufzublasen, wobei die Aufblasvorrichtung weiter eine Luftführungshülse (7) und ein Kühlgebläse (6) umfasst, und die Luftführungshülse (7) ein Luftführungsloch (11) aufweist, das die Luftführungshülse (7) durchdringt, und der Antriebsmotor (3) einen Hauptkörper (4) und eine Welle (5) umfasst, die drehbar in dem Hauptkörper (4) montiert ist, und die Welle (5) ein aus dem Hauptkörper (4) herausragendes Ende aufweist, um den Kern (2) zu bewegen, und das andere aus dem Hauptkörper (4) herausragende Ende aufweist, um das Kühlgebläse (6) zu koppeln, und die Luftführungshülse (7) eine Positionier-Hülle (8) und einen Luftführungsring (9) aufweist, der mit der Positionier-Hülle (8) gekoppelt ist, wobei die Positionier-Hülle (8) und der Luftführungsring (9) integral als eine einteilige Struktur gebildet sind und die Positionier-Hülle (8) in dem Gehäuse (1) und an dem Antriebsmotor (3) montiert ist, und der Luftführungsring (9) auf der Außenseite des Kühlgebläses (6) um das Kühlgebläse (6) ummantelt ist, die Positionier-Hülle (8) einen rechteckigen Querschnitt aufweist, und der Luftführungsring (9) einen kreisförmigen Querschnitt aufweist, und die Positionier-Hülle (8) einen Lochdurchmesser größer als den Lochdurchmesser des Luftführungsringes (9) aufweist, und eine platte Außenoberfläche der Positionier-Hülle (8) gegen das Gehäuse (1) angrenzt, was die Drehung der Positionier-Hülle (8) gegenüber dem Gehäuse (1) verhindert, und wobei die Positionier-Hülle (8) eine konkav gebildete Nut (15) auf einem von dem Luftführungsring (9) entfernten Ende der Positionier-Hülle (8) aufweist, und das Gehäuse (1) einen Verriegelungsblock aufweist, der sich in die Nut (15) der Positionier-Hülle (8) zur Verriegelung des Gehäuses (1) in der Positionier-Hülle (8) erstreckt, und wobei die Positionier-Hülle (8) eine Vielzahl von Beschränkungsarmen (12) aufweist, die sich einwärts in dem Luftführungsloch (11) erstrecken, und um die Mittenachse der Luftführungshülse (7) montiert sind, um den Hauptkörper (4) des Motors (3) angeordnet sind, und an der gleichen Seite des Kühlgebläses (6) angeordnet sind, und ein freies von dem Kühlgebläse entferntes Ende jedes Beschränkungsarms (12) zum Angrenzen gegen eine Außenoberfläche des Hauptkörpers (4) des Antriebsmotors (3) vorgesehen ist, um die Bewegung des Antriebsmotors (3) die radiale Richtung der Luftführungshülse (7) entlang zu verhindern, und die Vielzahl der Beschränkungsarme (12) Sperrvorsprunge (13) aufweisen, die durch Verlängerung eines freien Ende der Beschränkungsarme (12) zur Mittenachse der Luftführungshülse (7) gebildet sind, und die Sperrvorsprunge (13) zum Angrenzen gegen eine Endoberfläche eines Endes des Hauptkörpers (4) des Antriebsmotors (3) vorgesehen sind, um die Zusammenbauposition in axialer Richtung zwischen dem Hauptkörper (4) des Antriebsmotors (3) und der Luftführungshülse (7) zu beschränken.

2. Aufblasvorrichtung mit einer Luftführungshülse (7) nach Anspruch 1, wobei die Beschränkungsarme (12) Positionier-Schlitze (14) aufweisen, die konkav auf einer von dem Kühlgebläse (6) entfernten Seite der Beschränkungsarme (12) gebildet sind, und das Gehäuse (1) sich in dem Positionier-Schlitze (14) erstreckenden Positionier-Teile aufweist.

3. Aufblasvorrichtung mit einer Luftführungshülse (7) nach Anspruch 1 oder 2, wobei die Positionier-Hülle (8) vier geneigte Hauptplatten aufweist, die an den Ecken der Positionier-Hülle (8) angeordnet sind, die um die Mittenachse des Luftführungsloches (11) in einer kreisförmigen Aufstellung angebracht sind.

4. Aufblasvorrichtung mit einer Luftführungshülse (7) nach Anspruch 1, weiter umfassend einen Befestigungsring (16), der auf einer Außenseite des Antriebsmotors (3) ummantelt ist, und einen Luftspalt, der zwischen dem Antriebsmotor (3) und dem Gehäuse (1) gebildet ist; und zwei Laschen (17), die auf beiden Seiten des Befestigungsrings (16) konvex gebildet sind und voneinander entfernt angeordnet sind, wobei die zwei Laschen auf dem Gehäuse (1) montiert sind.

5. Aufblasvorrichtung mit einer Luftführungshülse (7) nach Anspruch 4, wobei eine der Laschen (17) eine Beschränkungserhebung (19) aufweist, und das Gehäuse (1) eine Beschränkungsrille zur Aufnahme der Beschränkungserhebung (19) aufweist.

6. Aufblasvorrichtung mit einer Luftführungshülse (7) nach Anspruch 4, wobei der Antriebsmotor (3) einen kreisförmigen Blindschlitz (21) aufweist, der konkav auf einer Außenoberfläche des Antriebsmotors (3) gebildet ist, und der Befestigungsring (16) in dem kreisförmigen Blindschlitz (21) aufgenommen ist.

7. Aufblasvorrichtung mit einer Luftführungshülse (7) nach Anspruch 6, wobei der Antriebsmotor (3) einen Verdrehsicherungsschlitz (22) aufweist, der mit dem kreisförmigen Blindschlitz (21) in Verbindung steht, und der Befestigungsring (16) eine Verdrehsicherungplatte (23) aufweist, die sich in dem Verdrehsicherungsschlitz (22) erstreckt.

8. Aufblasvorrichtung mit einer Luftführungshülse (7) nach einer der Ansprüche 4 bis 7, wobei beide Laschen (17) einen Verriegelungsblindschlitz (18) aufweisen, und das Gehäuse (1) zwei weitere Verriegelungsblocke aufweist, wobei die zwei Verriegelungsblocke sich in den Verriegelungsblindschlitzen (18) zur Verriegelung des Befestigungsrings (16) über die Laschen (17) im Gehäuse (1) erstrecken.

## Revendications

1. Dispositif de gonflage à manchon guidant l'air, comprenant un châssis (1), et un noyau (2) et un moteur d'entraînement (3) installé dans le châssis (1), et le moteur d'entraînement (3) étant prévu pour entraîner le noyau (2) afin de gonfler un objet extérieur, dans lequel le dispositif de gonflage comprend en outre un manchon guidant l'air (7) et un ventilateur de refroidissement (6), et le manchon guidant l'air (7) présente un orifice de guidage d'air (11) pénétrant à travers le manchon guidant l'air (7), et le moteur d'entraînement (3) comprend un corps principal (4) et un arbre (5) installé à rotation sur le corps principal (4), et l'arbre (5) présente une extrémité saillante par rapport au corps principal (4) afin d'entraîner le noyau (2) à se déplacer, et l'autre extrémité saillante par rapport au corps principal (4) afin de s'accoupler au ventilateur de refroidissement (6), et le manchon guidant l'air (7) comprend une enveloppe de positionnement (8) et une bague de guidage d'air (9) qui est couplée à l'enveloppe de positionnement (8), l'enveloppe de positionnement (8) et la bague de guidage d'air (9) étant couplées solidairement en tant que structure en une seule pièce, et l'enveloppe de positionnement (8) est installée sur le châssis (1) et sur le moteur d'entraînement (3), et la bague de guidage d'air (9) est rengainée sur un côté extérieur du ventilateur de refroidissement (6) autour du ventilateur de refroidissement (6), l'enveloppe de positionnement (8) présente une section transversale de forme rectangulaire, et la bague de guidage d'air (9) présente une section transversale de forme circulaire, et l'enveloppe de positionnement (8) présente un diamètre d'orifice supérieur à un diamètre d'orifice de la bague de guidage d'air (9), et une surface extérieure plate de l'enveloppe de positionnement (8) bute contre le châssis, ce qui empêche l'enveloppe de positionnement (8) de tourner par rapport au châssis (1), et où l'enveloppe de positionnement (8) présente une rainure (15) formée de façon concave à une extrémité de l'enveloppe de positionnement (8) à l'écart de la bague de guidage d'air (9), et le châssis (1) présente un bloc de verrouillage s'étendant dans la rainure (15) de l'enveloppe de positionnement (8) afin de verrouiller le châssis dans l'enveloppe de positionnement (8), et où l'enveloppe de positionnement (8) présente une pluralité de bras limitateurs (12) s'étendant vers l'intérieur dans l'orifice de guidage d'air (11), et installés autour de l'axe central du manchon guidant l'air (7), disposés autour du corps principal (4) du moteur (3), et disposés du même côté du ventilateur de refroidissement (6), et une extrémité libre de chaque bras limitateur (12) se trouvant à l'écart du ventilateur de refroidissement (6) est prévu pour buter contre une surface extérieure du corps principal (4) du moteur d'entraînement (3) afin d'empêcher le moteur d'entraînement (3) de se déplacer le long d'une direction radiale du manchon guidant l'air (7) et une pluralité de bras limitateurs (12) présentent des saillies de blocage (13) formées par l'extension d'une extrémité libre des bras limitateurs (12) vers l'axe central du manchon guidant l'air (7), et les saillies de blocage (13) sont prévues pour buter contre une surface terminale d'une extrémité du corps principal (4) du moteur d'entraînement (3) afin de limiter la position d'assemblage dans une direction axiale entre le corps principal (4) du moteur d'entraînement (3) et le manchon guidant l'air (7).

2. Dispositif de gonflage à manchon guidant l'air (7) selon la revendication 1, dans lequel les bras limitateurs (12) présentent des fentes de positionnement (14) formées de façon concave sur un côté des bras limitateurs (12) se trouvant à l'écart du ventilateur de refroidissement (6), et le châssis (1) présente des parties de positionnement s'étendant dans les fentes de positionnement (14).

3. Dispositif de gonflage à manchon guidant l'air (7) selon la revendication 1 ou 2, dans lequel l'enveloppe de positionnement (8) présente quatre plaques inclinées principales disposées aux angles de l'enveloppe de positionnement (8) aménagés autour de l'axe central de l'orifice de guidage d'air (11) en une formation circulaire.

4. Dispositif de gonflage à manchon guidant l'air (7) selon la revendication 1, comprenant en outre une bague de fixation (16) rengainée sur un côté extérieur du moteur d'entraînement (3), et un espace d'air qui est formé entre le moteur d'entraînement (3) et le châssis (1); et deux ergots (17) formés de façon convexe des deux côtés de la bague de fixation (16) et disposés à distance l'un de l'autre, et les deux ergots étant installés sur le châssis (1).

5. Dispositif de gonflage à manchon guidant l'air (7) selon la revendication 4, dans lequel l'un des ergots (17) présente une bosse limitatrice (19), et le châssis (1) présente une rainure limitatrice afin de recevoir la bosse limitatrice (19).

6. Dispositif de gonflage à manchon guidant l'air (7) selon la revendication 4, dans lequel le moteur d'entraînement (3) présente une fente borgne circulaire (21) formée de façon concave sur une surface extérieure du moteur d'entraînement (3), et la bague de fixation (16) est reçue dans la fente borgne circulaire (21).

7. Dispositif de gonflage à manchon guidant l'air (7) selon la revendication 6, dans lequel le moteur d'entraînement (3) présente une fente anti-rotation (22) en communication avec la fente borgne circulaire (21), et la bague de fixation (16) présente une plaque anti-rotation (23) s'étendant dans la fente anti-rotation (22).

8. Dispositif de gonflage à manchon guidant l'air (7) selon l'une quelconque des revendications 4 à 7, dans lequel les deux ergots (17) présentent une fente borgne de verrouillage (18), et le châssis présentent deux blocs de verrouillage supplémentaires, les deux blocs de verrouillage supplémentaires s'étendant dans les fentes borgnes de verrouillage (18) aptes à fixer la bague de fixation (16) au châssis (1) par l'intermédiaire des ergots (17).
